Europäisches Patentamt

European Patent Office

Office européen des brevets

(11) Numéro de publication: **0 207 813**
**B1**

# (12) FASCICULE DE BREVET EUROPEEN

(45) Date de publication du fascicule du brevet:
**22.03.89**

(21) Numéro de dépôt: **86400541.8**

(22) Date de dépôt: **14.03.86**

(51) Int. Cl.⁴: **F 16 L 33/00,** F 16 L 27/10,
F 16 J 3/04

(54) **Dispositif d'ancrage d'un système tubulaire souple sur un épaulement rigide grâce à une armature à secteurs liés.**

(30) Priorité: **17.05.85 FR 8507584**

(43) Date de publication de la demande:
**07.01.87 Bulletin 87/2**

(45) Mention de la délivrance du brevet:
**22.03.89 Bulletin 89/12**

(84) Etats contractants désignés:
**AT BE CH DE FR GB IT LI LU NL SE**

(56) Documents cités:
**CH-A- 488 119
US-A- 2 262 311
US-A- 2 298 736
US-A- 3 861 721**

(73) Titulaire: **Caoutchouc Manufacturé et Plastiques
Société Anonyme dite:, 143 bis rue Yves Le Coz
B.P. 554, F-78005 Versailles Cedex (FR)**

(72) Inventeur: **Bechu, Jean Pierre, "Les Poissons" 20 Ter,
rue de Bezons, F-92400 Courbevoie (FR)**
Inventeur: **Daignot, Bernard, Sougy S/Loire,
F-58300 Decize (FR)**
Inventeur: **Roux, Claude, 101, route nationale Saint
Leger des Vignes, F-58300 Decize (FR)**

Description

La présente invention est relative à un système d'ancrage des éléments de traction d'une structure tubulaire souple sur l'ouverture d'une paroi rigide ledit ancrage étant exercé par appui axial sur un épaulement ou une bride après passage par une ouverture ménagée dans ladite paroi rigide.

Dans la suite du texte, pour simplifier l'exposé de l'invention, le terme «manchon» sera utilisé pour définir la structure annulaire souple, le terme «talon» définissant l'extrémité du manchon qui présente un diamètre supérieur à celui du manchon et prend appui sur la paroi rigide, ci-après désignée par le terme «contre-bride».

On connaît des manchons avec talon souple, dans lesquels le talon comporte, généralement, une armature interne, c'est à dire noyée dans le caoutchouc, de forme annulaire, constituée de caoutchouc à module élevé, d'une bande de textile, d'un toron textile ou métallique ou encore d'un ressort souple. Ce type de renforcement est adopté pour rendre le talon déformable afin de permettre le montage des contre-brides après la fabrication du manchon, par passage forcé du talon dans l'alésage.

L'inconvénient majeur de ces systèmes réside dans la nécessité d'un pincement entre deux plans de la bride plane, selon le dispositif adopté, par exemple, par la Société Kléber Industrie pour ses manchons de compensation Dilatoflex NT (dossier technique 79-BA1) soit encore par utilisation d'une forme, obtenue par usinage, pour qu'une pièce rigide vienne prendre appui sur un diamètre intérieur à ce talon déformable, comme, par exemple, dans les membranes de suspension pneumatique décrites dans le brevet Continental FR 2 127 561 ou dans les manchons compensateurs de dilatation décrits dans les brevets FR 2 280 853 de Berghoffer ou FR 2 033 789 de Pirelli ou FR 2 006 730 de Continental.

Ces systèmes de manchons à talons souples nécessitent donc des techniques de montage qui provoquent, souvent, une forte concentration de contraintes à l'extrémité de la contre-bride, pouvant aller jusqu'à l'endommagement ou même la destruction de la fonction étanchéité. De ce fait, les manchons usuels à talons souples ne peuvent être utilisés que pour des pressions de service modérées.

Pour remédier à ces inconvénients, des solutions de talons rigides, à large surface de contact avec la bride ont été proposées. C'est, en effet, la solution adoptée par Kléber Industrie pour ses brides intégrées de tuyau, système Endflex (décrit dans le catalogue de tuyau Performer AD10, page 4) ou encore dans ses manchons de dilatation Dilatoflex K décrits dans le catalogue FC175-18 de juin 1984.

Ces dispositifs présentent, tous, une grande rigidité et sont, le plus souvent réalisés avec des éléments métalliques. De par leur conception, le caoutchouc se trouve comprimé sur une large surface d'appui ce qui améliore la répartition des contraintes et réduit la sensibilité au fluage, assurant, de ce fait, une meilleure garantie d'étanchéité et une possibilité d'utilisation à des pressions de services élevées.

Par contre, ces talons présentent, en raison de leur rigidité, l'inconvénient d'interdire le montage de contre-brides monoblocs après fabrication du manchon. Il est donc nécessaire de procéder au montage desdites contre-brides en cours de production et de vulcaniser le manchon ainsi équipé de ces pièces métalliques, qui en augmentent considérablement le poids et le volume.

En outre, les contre-brides ne sont plus démontables comme le montrent les catalogues Stenflex et General Rubber. Le fabricant des manchons doit alors constituer un stock important afin de disposer de manchons équipés de brides conformes aux différents raccordements normalisés.

Un manchon à brides démontables est décrit dans le brevet FR 2447512 mais les talons sont rigides et comportent des collerettes de renforcement séparées du manchon. La solution proposée, qui consiste à entourer la collerette par une forme de caoutchouc en U, nécessite la réalisation d'un moule très complexe.

Un tuyau dont l'extrémité comprend un élément annulaire muni de fentes permettant sa dilatation ou sa contraction dans des limites définies pour le montage d'une bride intégrée est décrit dans le brevet US 2 298 736. Un tel dispositif nécessite la pose de la bride en cours de fabrication et ne permet pas son démontage en cas d'avarie du manchon.

Comme on peut le voir, d'après l'analyse précédente, une solution conforme à l'état de la technique et qui permette de répondre aux exigences de qualité d'ancrage (pour résister à des pressions ou à des tractions importantes en service) et de facilité de montage sur une bride ou un épaulement rigide, n'est pas connue.

L'invention a donc pour objet la réalisation d'un dispositif d'ancrage qui offre les avantages des deux types de talons connus sans en subir les inconvénients.

Ledit ancrage est obtenu par un talon présentant une large surface d'appui sur la bride ou l'épaulement tout en offrant une souplesse permettant un pliage pour le passage du talon dans l'alésage.

L'invention permet ainsi une fabrication plus simple du manchon en éliminant les problèmes de poids et de volume dus à l'obligation de monter – dans les solutions connues antérieurement – les contre-brides, en cours de fabrication et surtout elle réduit, d'une manière considérable, ce qui représente un gain économique essentiel, la nécessité de maintenir un stock important de pièces en raison des différents raccordements, puisque la même gamme de manchons peut être équipée, au moment de la livraison, des différents types de contre-brides du commerce ou spéciales pour des fabrications à la demande. La gestion et la commercialisation des manchons se trouvent, ainsi, grandement facilitées; les délais de livraison sont réduits de manière importante.

L'invention consiste en un dispositif d'ancrage radial de structures tubulaires souples telles que des tuyaux en caoutchouc, des manchettes déformables, des compensateurs de dilatation, des membranes de suspension, sur l'ouverture d'une paroi rigide, par appui sur un épaulement ou une bride après passage par une ouverture ou un alésage pratiqués sur ladite paroi rigide, caractérisé en ce que la structure tubulaire souple – ou manchon – comporte au moins un talon renforcé par une armature à secteurs liés, noyée au sein du caoutchouc, constituée de secteurs rigides rendus solidaires par un élément de liaison souple, de nature quelconque, pour faciliter la fabrication mais laisser une possibilité de mouvement des secteurs entre eux, au moment du montage, afin d'offrir au talon une possibilité de pliage lui permettant de se glisser dans l'alésage de la paroi rigide sans altérer — après retour à la forme plane — la rigidité radiale qui confère audit talon la tenue nécessaire à son bon fonctionnement en service, lorsqu'il est serré entre la bride et la contre-bride.

L'essentiel de l'invention réside dans l'armature à secteurs liés de renforcement du talon, frette métallique ou plastique, de rigidité élevée, constituée de secteurs, de formes géométriques variées, rendus solidaires les uns des autres.

L'élément de liaison n'a pour objet que d'unir les secteurs individuels de l'armature entre eux, pour constituer une sorte de chaîne facilitant la pose de l'armature dans le talon, au moment de la confection du manchon. Souple, il ne joue aucun rôle dans le renforcement du dit talon et n'empêche pas la formation des ponts de gomme, c'est-à-dire des liaisons physico-chimiques entre les mélanges à base de caoutchouc situés, dans le moule, au dessus et en dessous de l'armature à secteurs liés.

Au moment de la fabrication, l'armature se présente ainsi en une seule pièce, comme une chaîne, ce qui facilite son maniement et son positionnement dans le moule.

Le positionnement de l'armature dans le moule peut être réalisé de plusieurs manières:

– soit en plaçant l'armature à secteurs liés directement dans le moule même:

– soit, dans une phase de pré-confection, en disposant l'armature sur un support comportant une couche de mélange à base de caoutchouc, avec ou sans embase textile.

La longueur de l'élément de liaison entre deux secteurs individuels consécutifs de l'armature est généralement comprise entre 0,05 et 0,30 fois la largeur d'un secteur, en fonction de la souplesse désirée pour le talon, afin d'obtenir une possibilité de pliage mécanique radial du talon, lors du montage dans la contre-bride de raccordement.

Au moment de la confection du manchon, l'armature à secteurs liés peut être placée dans le talon soit nue, soit enveloppée d'un pli de mélange de caoutchouc ou encore d'un matériau textile fin, les deux dernières possibilités ayant l'avantage d'éviter la blessure de la carcasse du manchon au contact des angles de l'armature à secteurs liés.

Les secteurs adhérisés ou non, noyés dans le caoutchouc forment, après vulcanisation, une armature rendant le talon rigide, grâce à la grande rigidité de compression des «ponts de gomme» cités plus haut. Cependant, ces secteurs s'articulent les uns par rapport aux autres sans blesser la carcasse de renforcement du manchon et permettent le passage du talon dans l'alésage, par pliage dudit talon devenu souple, la ré-ouverture du talon sur l'épaulement se faisant naturellement après mise en place des contre-brides. Le talon, bloqué entre la bride de raccordement et la contre-bride ou l'épaulement reste de rigidité radiale équivalente à celle d'un talon comportant une armature monobloc par effet d'auto-coincement.

Les secteurs de l'armature sont réalisés, préférentiellement, en métal tel que de l'acier, de l'aluminium, du zamak ou tout autre matériau (plastique renforcé ou composite) dont le module est supérieur à 1500 MPa.

L'élément de liaison est, le plus souvent, constitué d'un fil ou d'un câblé textile, d'un fil ou d'un cable métallique, d'un crin ou d'un jonc de matière plastique, d'un bracelet élastique ou encore d'un ruban ou d'un disque de matériau adhésif.

Le nombre des secteurs constituant l'armature à secteurs liés est, de préférence, compris entre 7 et 13, mais il peut être aussi grand que le permettent la résistance du matériau et l'économie de fabrication.

La forme générale des secteurs est, le plus souvent, trapézoïdale mais d'autres possibilités telles que, à titre d'exemples non limitatifs, des formes rectangulaires, triangulaires, en losange ou en double trapèze pourraient être envisagées: elles compliqueraient la fabrication des secteurs de l'armature mais ne nuiraient pas au fonctionnement.

Les caractéristiques et variantes de l'invention seront mieux comprises à la lecture de la description ci-après et en se référant aux dessins, sur lesquels:

La figure 1 est une vue «en écorché» du talon d'un manchon compensateur de dilatation comportant une armature classique sur la vue 1a et une armature à secteurs liés sur la vue 1b.

La figure 2 montre la structure d'un manchon souple comportant des talons.

Les figures 3, 4 et 5, représentent diverses réalisations de l'armature à secteurs liés pour le renforcement du talon.

La figure 6 illustre différentes formes que peuvent prendre les secteurs de l'armature à secteurs liés.

La figure 7 montre la possibilité de confection de l'armature du talon.

La figure 8 présente diverses possibilités de réalisation de l'élément de liaison.

La figure 9 schématise le principe de montage des contre-brides.

Les figures 10 et 11 représentent, à titre d'exemples non limitatifs, quelques applications particulières de l'invention.

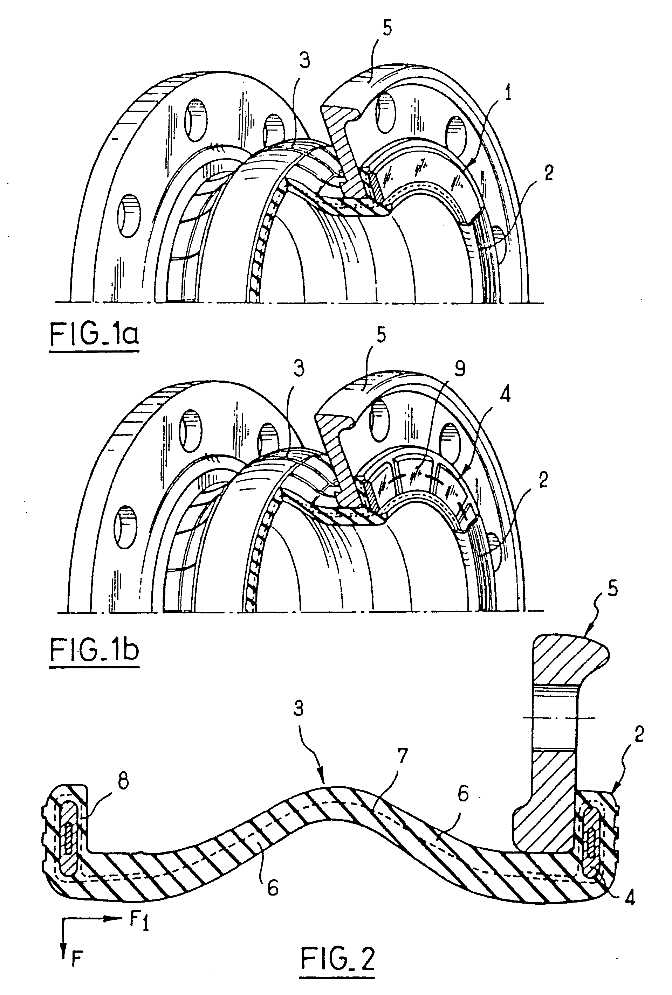

On peut voir, sur la figure 1, l'armature du talon (2) d'un manchon compensateur de dilatation (3) classique (1) à talon rigide muni de sa contre-bride (5), sur la vue 1a, et l'armature à secteurs liés (4) du talon (2) qui s'y substitue d'après l'invention, sur la vue 1b.

La figure représente la pièce que l'on obtiendrait après élimination de la couche supérieure, en caoutchouc, du talon (2) ainsi dénudé jusqu'à son armature (1) ou (4) selon le cas.

La figure 2 schématise, en coupe, la structure d'un manchon (3) dont le corps en caoutchouc (6) est armé d'une carcasse de cablés textiles ou métalliques (7) et dont les talons (2), qui s'appuient sur l'épaulement ou la contre-bride (5), sont renforcés par les armatures à secteurs liés (4). On peut y remarquer la remontée (8) de la carcasse (7) autour de l'armature (4) dans la zone des talons (2).

Cette figure montre également la force F qui se développe lors de la mise sous pression du manchon et bloque les secteurs de l'armature (4), les uns contre les autres, dans un effet d'auto-coincement et ce, sans déplacement desdits secteurs. La force F1 est la force de traction qui s'exerce sur la carcasse textile ou métallique (7) du manchon (3). La résistance à l'effort de traction F1 n'est pas affectée par la relative souplesse de l'armature, les performances du manchon (3) restant sensiblement, identiques, en service, à celles qui seraient obtenues avec un manchon à talons renforcés par des armatures rigides continues.

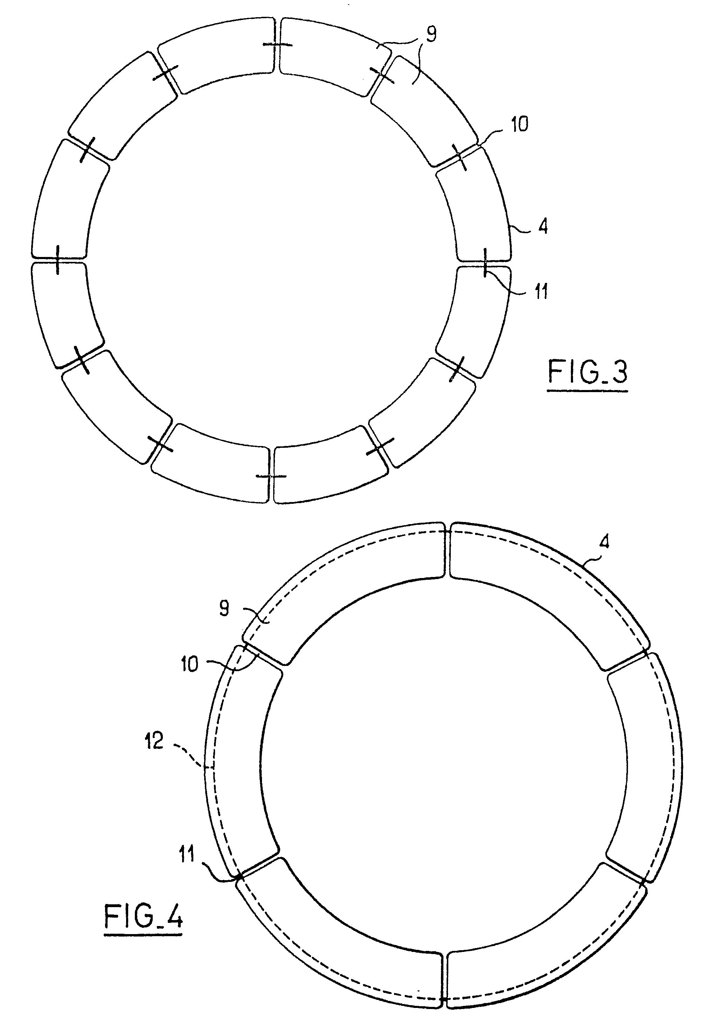

La figure 3 illustre une des configurations parmi les plus usuelles de l'armature à secteurs liés. L'armature (4) est constituée de 12 secteurs (9) de même taille, de forme générale trapézoïdale, rendus solidaires par un anneau métallique (11).

La figure 4 montre une autre configuration de l'armature à secteurs liés (4) dans laquelle le nombre des secteurs individuels (9) est limité à 6. Dans cette réalisation, les secteurs (9) sont tous de taille identique. L'élément de liaison (11) est constitué par un bracelet élastique, engagé dans une rainure (12) placé à la partie la plus externe des secteurs (9).

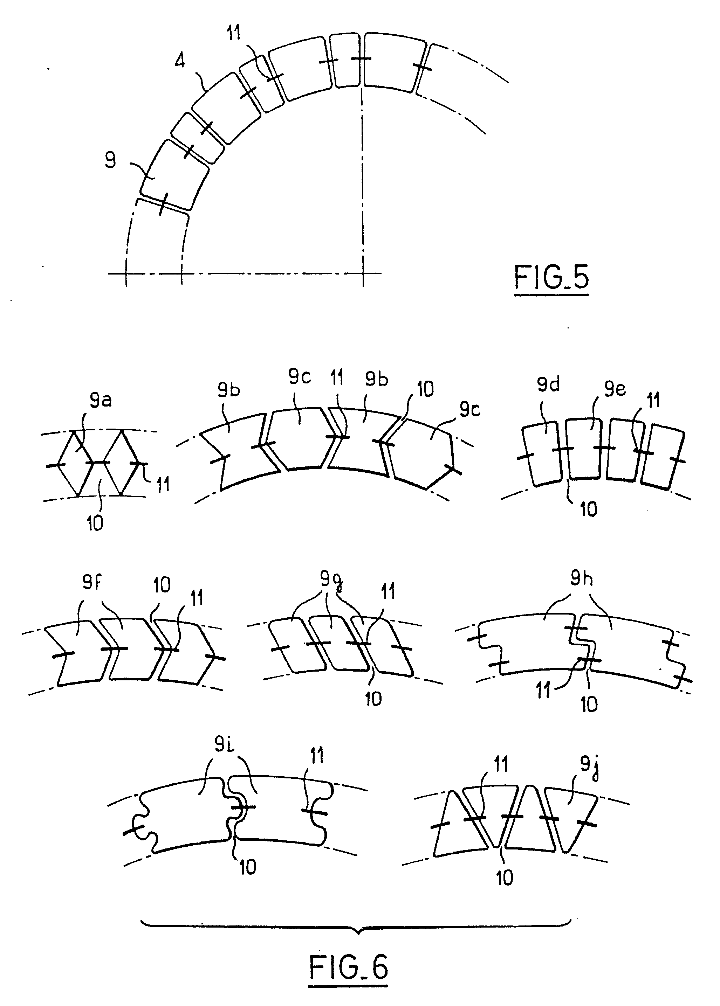

La figure 5 illustre une variante de réalisation de l'armature à secteurs liés (4) dans laquelle le nombre des secteurs (9) est de 32, leur forme générale trapézoïdale, leur taille différente et leur arrangement du type alternance d'un grand secteur et d'un petit secteur. L'élément de liaison (11) est consitué par un cordon textile continu qui permet un enfilage des secteurs.

La figure 6 décrit, à titre d'exemples non limitatifs, quelques-unes des formes qu'il est possible de donner aux secteurs (9) de l'armature à secteur liés (4).

C'est ainsi que les secteurs (9a) sont en forme de losange et laissent entre eux une zone (10) de surface importante pour la liaison des mélanges à base de caoutchouc entourant l'armature à secteurs liés.

Les secteurs (9b) et (9c) sont en forme de double trapèze liés par la petite base dans le cas (9b) et par la grande base dans le cas (9c). Les formes (9b) et (9c) sont, généralement, utilisées ensemble et laissent entre elles une zone de séparation (10) de faible surface. Il serait également possible de n'associer que des secteurs de forme (9b) ou que des secteurs de forme (9c) ce qui accroîtrait la souplesse du talon en rendant plus importante la surface de la zone de séparation permettant les ponts de gomme qui sépareront deux secteurs voisins. Ces configurations ne sont pas représentées sur le dessin.

Les formes (9d) et (9e) sont pratiquement rectangulaires et peuvent être séparées par une zone (10) de la largeur désirée pour la souplesse du talon.

Les formes en chevron (9f) ou les formes plus complexes telles que (9h) et (9i) peuvent s'utiliser dans un structure quasi imbriquée ou avec une zone de séparation (10) de la largeur désirée entre deux ou plusieurs secteurs.

Avec la forme parallélépipédique (9g) il est possible d'obtenir — comme avec les formes (9b), (9c), (9h), (9i) et (9j) — un effet de coincement plus important qu'avec les formes (9a), (9d) et (9e) en raison de la forme même des secteurs.

Les formes triangulaires (9j) se prêtent à un montage tel que décrit sur le dessin comme à un assemblage (non représenté) où toutes les pointes ou toutes les bases des secteurs triangulaires seraient dirigées vers le centre de l'armature à secteurs liés. Cette dernière configuration laisse entre deux secteurs successifs (9) une zone de séparation (10) plus large et accroît, par conséquent, la souplesse du talon (2).

Les éléments de liaison (11) peuvent être constitués par tout moyen approprié pour établir, entre deux secteurs constitutifs une liaison souple ou articulée.

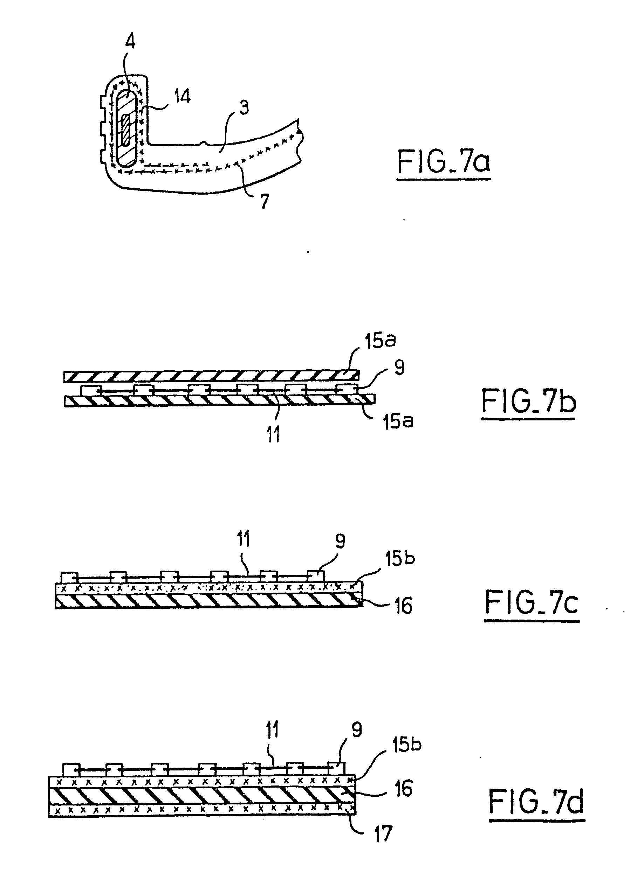

Sur la figure 7, la vue 7a décrit une possibilité de protection de la carcasse de renforcement (7) du manchon (3) en entourant l'armature (4) par un pli protecteur (14) constitué de mélange à base de caoutchouc ou d'un textile fin pour protéger ladite carcasse de renforcement d'une blessure au contact des bords des secteurs individuels (9) de l'armature à secteurs liés (4). Cette structure s'obtient, au cours de la phase de pré-confection de l'armature du manchon.

La vue 7b montre une telle réalisation de pré-confection de l'armature à secteurs liés à partir de plis protecteurs de caoutchouc (15a) alors que les vues 7c et 7d schématisent la pose du pli protecteur textile (15b) sur une feuille de caoutchouc cru (16) servant de support, seule comme dans la vue 7c ou qui peut être, elle-même, solidaire d'un substrat textile (17) comme dans la vue 7d.

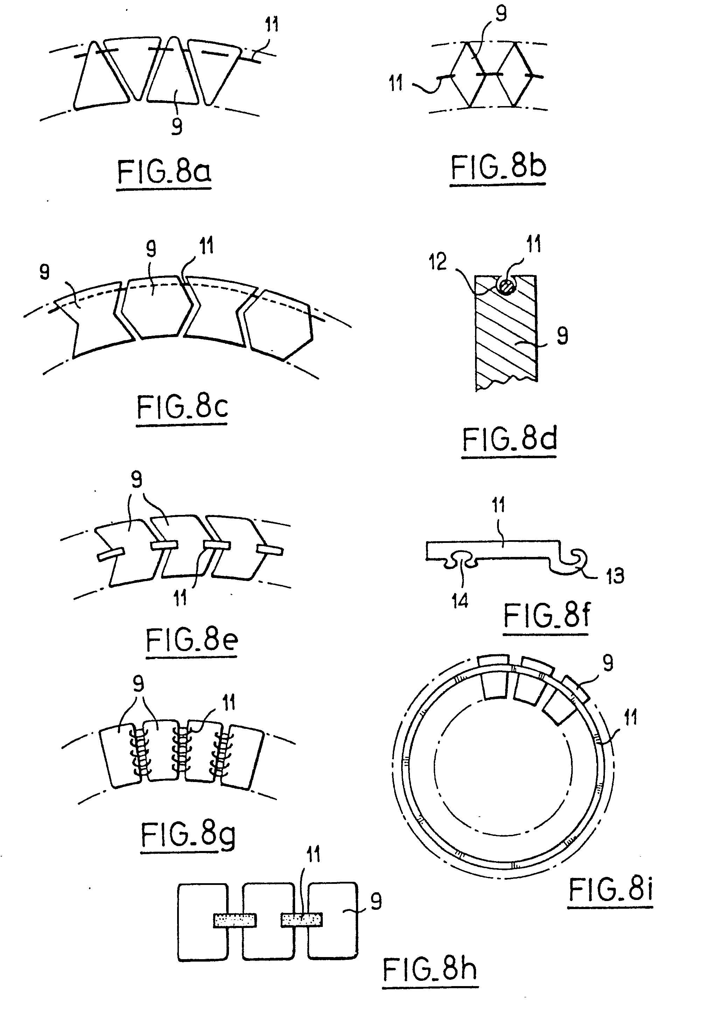

La figure 8 représente divers modes de réalisation de l'élément de liaison (11) des secteurs (9) de l'armature (4).

Dans la vue 8a, les secteurs (9), de forme triangulaire, sont enfilés sur un cablé continu, fait de textile, de métal ou de matière plastique, constituant l'élément de liaison (11), comme des perles sur un cordon de collier.

Dans la vue 8b, les secteurs (9) en forme de losange, sont reliés par des anneaux constituant l'élément de liaison (11).

Dans les vues 8c et 8d, les secteurs (9), en forme de double trapèze, sont rendus solidaires par un bracelet élastique constituant l'élément de liaison (11). Ce bracelet élastique se loge dans une rainure (12) pratiquée à la périphérie externe du secteur (9).

Dans la vue 8e, les secteurs (9), en forme de chevron, sont réunis par un système d'ancrage articulé constituant l'élément de liaison (11), dans lequel, comme le montre la vue 8f, la tête d'un crochet à rotule (13) s'engage à force dans l'alvéole (14) de l'élément de liaison suivant.

Dans la vue 8g, les secteurs (9), de forme parallélépipédique, sont réunis par un laçage hélicoïdal constituant l'élément de liaison (11).

Dans les vues 8h et 8i, l'élément de liaison (11) est réalisé par une bande de matériau adhérant suffisamment aux secteurs (9) pour les rendre solidaires. Cet élément de liaison peut être discontinu, comme sur la vue 8h, ou continu, par exemple sous forme de disque, comme sur la vue 8i. Il peut être constitué de caoutchouc à fort pouvoir collant à cru ou d'adhésif en ruban sur un support souple.

Bien entendu, tous les éléments de liaison (11) peuvent être associés à toutes les formes de secteurs (9) pour former une armature (4) constituée de secteurs liés entre eux de manière souple ou articulée qui permettra de plier le talon de l'article fini pour l'introduire dans l'alésage de la contre-bride.

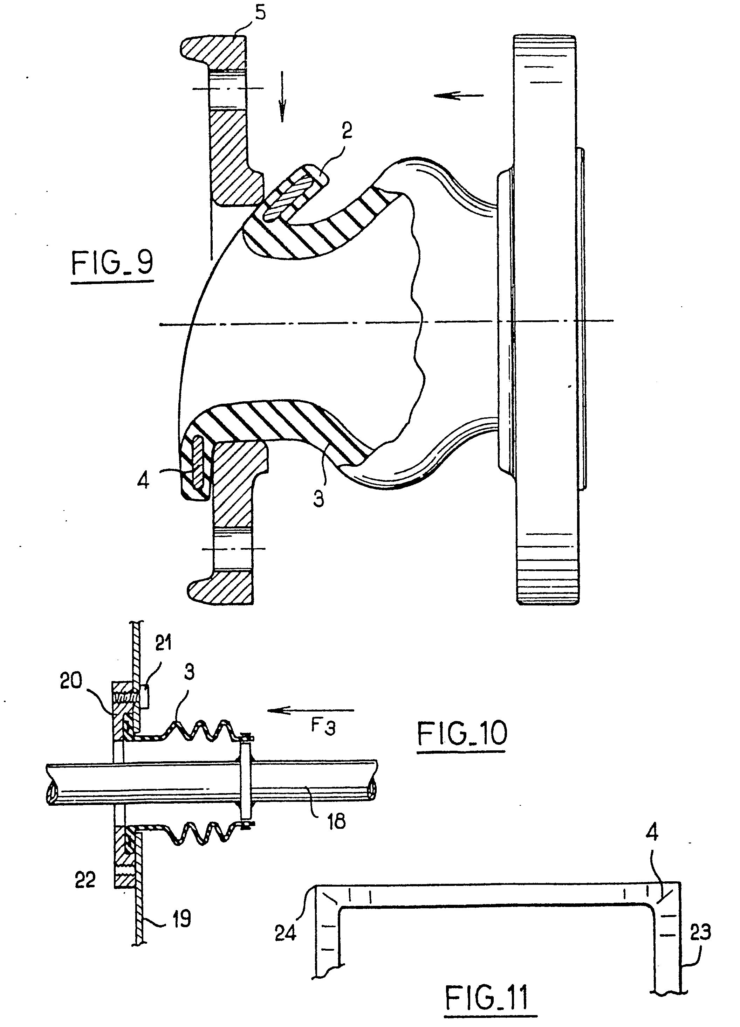

La figure 9 schématise le montage des contre-brides (5) sur le manchon (3) par passage forcé du talon (2), comportant l'armature à secteurs liés (4) au travers de l'alésage de la contre-bride.

La figure 10 illustre une application de l'invention à la traversée d'une cloison ou d'une paroi (19), (par exemple, celle d'un réservoir ou d'un tuyau rigide) par une tuyauterie, une tige ou une gaine (18) maintenue par un manchon (3) grâce à une bride (20) fixée par boulons (21) lorsque la partie interne (22) est inaccessible. La flèche F3 indique le sens de montage.

Les figures précédentes ont été illustrées le plus souvent par l'application à des pièces de révolution, mais le dispositif d'ancrage proposé n'est pas limité à ce type de pièces: son fonctionnement serait tout aussi satisfaisant pour le montage sur des pièces dont l'ouverture serait ovale ou rectangulaire.

La figure 11 donne, à titre non limitatif, l'exemple d'une ouverture rectangulaire telle que celle d'une gaine de ventilation (23) dans laquelle l'armature à secteurs liés (4) ne serait insérée que dans les zones angulaires (24) de la gaine.

Les applications de l'invention ne sont pas limitées aux cas illustrés. Entre autres possibilités, il est avantageux d'utiliser le système décrit dans l'invention pour l'ancrage des extrémités, qui sont alors surmoulées de caoutchouc, de cables de tension ou de précontrainte, ou encore pour l'ancrage sur une ouverture de forme quelconque des dispositifs souples d'évacuation d'urgence dans les bâtiments.

Comme on le voit, par la description et les illustrations précédentes, le dispositif d'ancrage proposé permet le montage facile d'un manchon, d'une gaine ou de tout autre objet souple, de forme tubulaire, sur une forme rigide, à la seule condition que l'objet à ancrer soit muni d'un talon dont l'armature, selon l'invention, est constituée de secteurs liés d'une manière non rigide.

L'invention évite de ce fait la manutention de pièces lourdes et volumineuses qui viennent compliquer les moules ou les outils de fabrication des manchons. Elle réduit les nécessités de stockage d'une grande variété de manchons, comportant chacun des contre-brides de raccordement normalisé; elle diminue également les surfaces nécessaires au stockage, les manchons sans contre-brides étant moins volumineux que ceux qui en sont équipés: elle simplifie l'exécution des commandes en permettant le montage, pour un diamètre donné, des différents type de contre-brides; elle permet donc, par ces divers avantages un gain appréciable de productivité et améliore les conditions de travail lors de la fabrication des manchons.

Enfin, en cas d'avarie du manchon, les contre-brides sont démontables et donc réutilisables sur un manchon de remplacement, ce qui représente une économie non négligeable.

**Revendications**

1. Dispositif d'ancrage radial de structures tubulaires souples telles que des tuyaux en caoutchouc, des manchettes déformables, des compensateurs de dilatation, des membranes de suspension, sur l'ouverture d'une paroi rigide par appui sur un épaulement ou une bride après passage par une ouverture ou un alésage pratiqués sur la dite paroi rigide, ladite structure tubulaire souple – ou manchon – (3) comportant au moins un talon (2) renforcé par une armature noyée au sein du caoutchouc, caractérisé en ce que ladite armature est constituée de secteurs (9) rendus solidaires par un élément de liaison (11), non rigide, afin d'offrir au talon (2) une possibilité de pliage dans le sens axial lui permettant de se glisser dans l'alésage de la paroi rigide (5) sans altérer sa rigidité radiale.

2. Dispositif d'ancrage selon la revendication 1, caractérisé en ce que les secteurs (9) de l'armature (4) du talon (2) ont même géométrie.

3. Dispositif d'ancrage selon l'une des revendications 1 ou 2, caractérisé en ce que la longueur de la liaison (11) entre deux secteurs consécutifs (9) de l'armature à secteurs liés (4) est comprise entre 0,05 et 0,30 fois la largeur de l'un des dits secteurs (9).

4. Dispositif d'ancrage selon l'une des revendications 1 à 3, caractérisé en ce que l'ensemble des secteurs (9) de l'armature (4) est rendu solidaire par un élément de liaison (11) souple, unique et continu.

5. Dispositif d'ancrage selon l'une des revendications 1 à 3, caractérisé en ce que l'élément de liaison (11) est constitué d'un bracelet élastique logé dans une rainure (12) ménagée à la périphérie des des secteurs (9) de l'armature (4).

6. Dispositif d'ancrage selon l'une des revendications 1, 3, 4 ou 5, caractérisé en ce que l'armature à secteurs liés (4) est constituée d'une alternance de secteurs (9) de géométries différentes.

7. Dispositif d'ancrage selon l'une des revendications 1 à 6, caractérisé en ce que le secteurs (9) de l'armature (4) du talon (2) sont réalisés en un matériau métallique ou plastique dont le module est au moins égal à 1500 MPa.

8. Dispositif d'ancrage selon l'une des revendications 1 à 7, caractérisé en ce que le nombre des secteurs (9) de l'armature à secteurs liés (4) de renforcement du talon (2) est de 8, 12, 16 ou 24.

9. Dispositif d'ancrage selon l'une des revendications 1 à 3 ou 6 à 8, caractérisé en ce que l'élément de liaison (11) des secteurs (9) de l'armature (4) est constitué d'anneaux textiles ou métalliques.

10. Dispositif d'ancrage selon l'une des revendications 1 à 3 ou 6 à 8, caractérisé en ce que l'élément de liaison (11) des secteurs (9) de l'armature (4) est constitué d'un système articulé.

11. Dispositif d'ancrage selon l'une des revendications 1 à 3 ou 6 à 8, caractérisé en ce que l'élément de liaison (11) des secteurs (9) de l'armature (4) est constitué d'un laçage hélicoïdal.

12. Dispositif d'ancrage selon l'une des revendications 1 à 3 ou 6 à 8, caractérisé en ce que l'élément de liaison (11) des secteurs (9) de l'armature (4) est constitué d'un ruban ou d'un disque réalisé en un matériau ayant un pouvoir adhésif.

13. Manchon compensateur de dilatation caractérisé en ce que l'un au moins des talons (2) comporte un dispositif d'ancrage conforme à l'une des revendications 1 à 12.

14. Tuyau souple comportant des brides intégrés caractérisées en ce que leurs talons (2) comportent un dispositif d'ancrage conforme à l'une des revendications 1 à 12.

15. Membrane de suspension caractérisée en ce que l'un au moins des talons (2) comporte un dispositif d'ancrage conforme à l'une des revendications 1 à 12.

## Patentansprüche

1. Vorrichtung zum radialen Verankern von biegsamen rohrförmigen Körpern, wie Kautschukrohren, verformbaren Manschetten, Dehnungsausgleichsverbindungen bzw. Aufhängungsmembranen, auf der Öffnung einer starren Wand durch Auflage auf einer Schulter oder einem Flansch nach dem Hindurchführen durch eine Öffnung oder eine Bohrung in dieser starren Wand, wobei der biegsame rohrförmige Körper – oder die Muffe (3) – mindestens einen Wulst (2) aufweist, der durch eine im Kautschuk eingebettete Armierung verstärkt ist, dadurch gekennzeichnet, daß die Armierung aus Sektoren (9) besteht, die durch ein nicht starres Verbindungselement (11) miteinander verbunden sind, um dem Wulst (2) die Möglichkeit zum Umfalten in Axialrichtung zu geben, so daß er ohne Beeinträchtigung seiner radialen Steifigkeit durch die Bohrung in der starren Wand (5) gleiten kann.

2. Verankerungsvorrichtung nach Anspruch 1, dadurch gekennzeichnet, daß die Sektoren (9) der Armierung (4) des Wulstes (2) in ihrer geometrischen Form übereinstimmen.

3. Verankerungsvorrichtung nach einem der Ansprüche 1 oder 2, dadurch gekennzeichnet, daß die Länge des Verbindungselementes (11) zwischen zwei aufeinanderfolgenden Sektoren (9) der Armierung aus miteinander verbundenen Sektoren (4) (?9) das 0,05 bis 0,30-fache der Breite eines dieser Sektoren (9) beträgt.

4. Verankerungsvorrichtung nach einem der Ansprüche 1 bis 3, dadurch gekennzeichnet, daß die Gesamtheit der Sektoren (9) der Armierung (4) durch ein biegsames, einstückiges und durchlaufendes Verbindungselement (11) verbunden ist.

5. Verankerungsvorrichtung nach einem der Ansprüche 1 bis 3, dadurch gekennzeichnet, daß das Verbindungselement (11) aus einem elastischen Ring besteht, der in einer Nut (12) am Umfang der Sektoren (9) der Armierung (4) eingelegt ist.

6. Verankerungsvorrichtung nach einem der Ansprüche 1, 3, 4 oder 5, dadurch gekennzeichnet, daß die Armierung (4) aus miteinander verbundenen Sektoren (9) aus einer Folge von Sektoren abwechselnd unterschiedlicher geometrischer Form besteht.

7. Verankerungsvorrichtung nach einem der Ansprüche 1 bis 6, dadurch gekennzeichnet, daß die Sektoren (9) der Armierung (4) des Wulstes (2) aus Metall oder Kunststoff mit einem Modul von mindestens 1500 MPa bestehen.

8. Verankerungsvorrichtung nach einem der Ansprüche 1 bis 7, dadurch gekennzeichnet, daß die Armierung (4) aus mit einander verbundenen Sektoren (8) zur Verstärkung des Wulstes aus 8, 12, 16 oder 24 Sektoren besteht.

9. Verankerungsvorrichtung nach einem der Ansprüche 1 bis 3, oder 6 bis 8, dadurch gekennzeichnet, daß das Verbindungselement (11) für die Sektoren (9) der Armierung (4) aus textilen oder metallischen Ringen besteht.

10. Verankerungsvorrichtung nach einem der Ansprüche 1 bis 3 oder 6 bis 8, dadurch gekennzeichnet, daß das Verbindungselement (11) für die Sektoren (9) der Armierung (4) aus einem Gelenksystem besteht.

11. Verankerungsvorrichtung nach einem der Ansprüche 1 bis 3 oder 6 bis 8, dadurch gekennzeichnet, daß das Verbindungselement (11) für die Sektoren (9) der Armierung (4) aus einer Schraubenwendel besteht.

12. Verankerungsvorrichtung nach einem der Ansprüche 1 bis 3, oder 6 bis 8, dadurch gekennzeichnet, daß das Verbindungselement (11) für die Sektoren (9) der Armierung (4) aus einem Band oder einer Scheibe aus einem Material mit klebenden Eigenschaften besteht.

13. Dehnungsausgleichsmuffe, dadurch gekennzeichnet, daß mindestens einer der Wülste (2) eine Verankerungsvorrichtung nach einem der Ansprüche 1 bis 12 aufweist.

14. Biegsames Rohr mit integrierten Flanschen, dadurch gekennzeichnet, daß ihre Wülste (2) eine Verankerungsvorrichtung nach einem der Ansprüche 1 bis 12 aufweisen.

15. Aufhängungsmembran, dadurch gekennzeichnet, dass mindestens einer der Wülste (2) eine Verankerungsvorrichtung nach einem der Ansprüche 1 bis 12 aufweist.

## Claims

1. A device for radial anchoring of pliable tubular structures such as rubber tubes, deformable sleeves, expansion compensators, suspension diaphragms, on the opening of a rigid wall by bearing on a shoulder or flange after passing through an opening or a bore made in the said rigid wall, the said pliable tubular structure – or sleeve – (3) comprising at least one heel (2) strengthened by a reinforcement embedded in the rubber, characterised in that the said reinforcement is constituted by sectors (9) made integral by a non-rigid coupling element (11) in order to impart to the heel (2) a possibility of bending in the axial direction, enabling it to be slipped into the bore of the rigid well (5) without impairing its radial rigidity.

2. Anchoring device according to claim 1, characterised in that the sectors (9) of the reinforcement (4) of the heel (2) have the same geometry.

3. Anchoring device according to one of claims 1 or 2, characterised in that the length of the coupling (11) between two consecutive sectors (9) of the reinforcement (4) comprising linked sectors is comprised between 0.05 to 0.30 times the width of one of the said sectors (9).

4. Anchoring device according to one of the claims 1 to 3, characterised in that the assembly of sectors (9) of the reinforcement (4) is made integral by means of a pliable, single and uninterrupted coupling element (11).

5. Anchoring device according to one of claims 1 to 3, characterised in that the coupling element (11) is formed by an elastic hoop housed in a groove (12) formed at the periphery of the sectors (9) of the reinforcement (4).

6. Anchoring device according to one of claims 1, 3, 4 or 5, characterised in that the reinforcement (4) comprising linked sectors is constituted by an alternation of sectors (9) of different geometries.

7. Anchoring device, according to one of claims 1 to 6, characterised in that the sectors (9) of the reinforcement (4) of the heel (2) are produced from a metallic or plastics material the modulus of which is at least equal to 1500 MPa.

8. Anchoring device according to one of claims 1 to 7, characterised in that the number of sectors (9) of the reinforcement (4) comprising linked sectors for strengthening of the flange (2) is 8, 12, 16 or 24.

9. Anchoring device according to one of claims 1 to 3 or 6 to 8, characterised in that the coupling element (11) of the sectors (9) of the reinforcement (4) is constituted by textile or metallic rings.

10. Anchoring device according to one of claims 1 to 3 or 6 to 8, characterised in that the coupling element (11) of the sectors (9) of the reinforcement (4) is constituted by an articulated system.

11. Anchoring device according to one of claims 1 to 3 or 6 to 8, characterised in that the coupling element (11) of the sectors (9) of the reinforcement (4) is constituted by helical lacing.

12. Anchoring device according to one of claims 1 to 3 or 6 to 8, characterised in that the coupling element (11) of the sectors (9) of the reinforcement (4) is constituted by a tape or a disc produced from a material having an adhesive capacity.

13. Expansion compensator sleeve characterised in that at least one of the heels (2) comprises an anchoring device according to one of claims 1 to 12.

14. Pliable tube comprising integral flanges, characterised in that their heels (2) comprise an anchoring device according to one of claims 1 to 12.

15. Suspension diaphragm characterised in that at least one of the heels (2) comprises an anchoring device according to one of claims 1 to 12.

FIG.1a

FIG.1b

$F_1$

$F$

FIG.2

FIG. 3

9

10

4

11

FIG. 4

4

9

10

12

11

FIG.5

9b      9c  11  9b      10
9a                              9c

9d      9e  11

10

9f      10  11          9g      11          9h

11      10

9i          11          11          9j

10          10

FIG.6

13

FIG. 7a

FIG. 7b

FIG. 7c

FIG. 7d

FIG.8a

FIG.8b

FIG.8c

FIG.8d

FIG.8e

FIG.8f

FIG.8g

FIG.8h

FIG.8i

FIG_9

FIG_10

FIG_11